# EUROPEAN PATENT APPLICATION

(11) **EP 4 501 574 A1**
(43) Date of publication of application: **05.02.2025**
(21) Application number: 23189896.6
(22) Date of filing: 04.08.2023
(51) Int. Cl.: B29C 33/26, B29C 31/00, B29D 99/00, B29L 31/08

(54) **SYSTEM AND METHOD FOR HANDLING BLADE MOLDS FOR MANUFACTURING WIND TURBINE BLADES**

(71) Applicant: LM Wind Power A/S, 6000 Kolding (DK)
(72) Inventor: NYTOFT, Thomas, 6640 Lunderskov (DK)
(74) Representative: Bardehle Pagenberg S.L.

(57) **Abstract**

The present disclosure relates to systems for handling wind turbine blade molds (103, 203) during blade manufacturing. The system comprises a first framework (100) configured to hold a mold (103) of one of an upwind or a downwind blade shell part of a wind turbine blade and a second framework (200) configured to hold a mold (203) of the other of the upwind and the downwind blade shell part of a wind turbine The system further comprises a set (300) of one or more hinge devices (301a-301d) wherein the hinge devices (301a-301d) comprise hinge connection interfaces (306, 307, 308) that are configured to be releasably connected to corresponding framework connection interfaces (104, 105) of the first framework (100) and to corresponding framework connection interfaces (204) of the second framework (200). The present disclosure further comprises a method (400) for manipulating parts during blade manufacturing.

## Description

### FIELD

The present disclosure relates to wind turbine blades, and more particularly, to a system for handling blade molds during manufacturing of wind turbine blades. The disclosure further concerns a method used in the manufacturing of wind turbine blades.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

It is known to manufacture wind turbine blades where each of the wind turbine blades are molded and assembled at the same workstation. The wind turbine blade may then be moved to another workstation, typically a finishing workstation, where the wind turbine blade is cut, trimmed, painted and the final fittings are mounted on the wind turbine blade.

The wind turbine blades are often made of fiber-reinforced polymer and are usually manufactured as shell parts in molds, where the top side and the bottom side of the blade profile (typically the upwind or pressure side and the downwind or suction side, respectively) are manufactured separately by arranging glass fiber mats in each of the two molds and injecting a liquid resin, which subsequently is cured. Afterwards, the two halves are glued together, often by means of internal flange parts. Glue is applied to the inner face of the lower blade half before the upper blade half is lowered thereon or *vice versa.* Additionally, one or two reinforcing profiles (beams) are often attached to the inside of the lower blade half prior to gluing to the upper blade half. A crane or hoisting assembly may be used to lift one of the mold parts about a hinge line for closure and opening of the molds. Throughout this disclosure, a mold will primarily refer to each of the mold parts used for the manufacture of a blade shell part.

However, as the demand for wind turbines is rapidly increasing, it is found increasingly difficult to scale the conventional manufacturing method to accommodate the demand for several reasons: Firstly, the usual manufacturing method requires that all the materials required for manufacturing a wind turbine blade, e.g. resin and fiber reinforcement material, be transported to every workstation, which is logistically demanding. Secondly, every workstation has to be equipped with tools necessary for every single manufacturing step in the process, which results in a significant overhead. Additionally, the usual manufacturing method requires a mold in every single workstation, which is expensive since production and maintenance of molds are time consuming and thus expensive. Furthermore, the conventional manufacturing method occupies a lot of space, and since the workers at each workstation have to perform a variety of manufacturing steps, there is a risk that the quality of the manufactured wind turbine blades may suffer.

A specific logistic difficulty is associated with the manufacturing step of lifting one of the molds about a hinge for closure of the molds, i.e. for putting a mold containing a blade shell part on top of the other mold containing the other blade shell parts so that the blade parts can be fasted together. Due to the increasing size of the blades, this operation imposes a minimum building height which, based on the usual manufacturing method, results in a requirement to construct a manufacturing facility with a high ceiling at all workstations.

So far, wind turbine production still relies on the above-mentioned manufacturing methods. EP2403708 proposes an alternative manufacturing method and an alternative manufacturing line involving "moving molds". In this prior art document, a manufacturing line is disclosed, wherein wind turbine blades are formed in a number of mold sets, each of the mold sets comprising at least a first mold comprising a first mold cavity. The manufacturing line further comprises a number of separate workstations, where separate manufacturing steps are carried out. In particular, a sequence of steps in different workstations may be carried out to manufacture each of the blade shell parts. Once manufactured, the two blade shell parts are moved to a separate workstation where they are adhered to each other, e.g. by gluing flanges located at the leading edge and trailing edge of the finished wind turbine blade. Hereby, a method is provided whereby wind turbine blades can be manufactured using fewer resources e.g. molds and tools, or alternatively improving the throughput as the method increases the number of manufactured wind turbine blades per time unit compared to conventionally project oriented manufacturing methods.

Since the mold sets are movable in relation to the workstations, the method furthermore provides that each workstation can be equipped with specialized and advanced equipment that is dedicated to the manufacturing step carried out at each workstation. Additionally, each workstation can be manned with specialized workers that are skilled and trained in the manufacturing step carried out at that particular workstation, which lowers quality risks. However, some of the workstations can also be automated, e.g. by using robots, such that fewer workers are needed. Automation is also expected to additionally improve the quality of the manufactured wind turbine blades.

US 9,796,116 discloses a transport vehicle for handling a rotor blade mold for the production of a rotor blade of a wind power installation or a shell portion of a rotor blade of a wind power installation, adapted for use in a handling apparatus. The handling apparatus includes a first rail set for displacement of the transport vehicle in a first direction, and a second rail set for displacement of the transport vehicle in a second direction. In addition the transport vehicle includes a first wheel set including a plurality of wheels for movement on the first rail set, and a second wheel set including a plurality of wheels for movement on the second rail set.

The handling apparatus can include a first rotor blade mold for the production of a first rotor shell portion and also a second rotor blade mold arranged on the transport vehicle for the production of a second rotor blade shell portion. The first rotor blade mold can be arranged to be stationary or can also be arranged on a transport vehicle. In addition there is provided a hinge device adapted for pivotal movement of the second rotor blade mold, more specifically in such a way that a second rotor blade shell portion accommodated by the second rotor blade mold is pivoted on to a first rotor blade shell portion accommodated in the first rotor blade mold in order in that way to assemble those two rotor blade shell portions and to finish the rotor blade or to produce a corresponding sub-portion of the rotor blade. Preferably the hinge device is adapted to be fixedly but releasably connected to the second rotor blade mold for the pivotal movement.

EP2403708 and US 9,796,116 disclose methods and systems which have important advantages over other prior art systems but further improvements are still welcome, in particular in terms of flexibility of the manufacturing line and the ability to handle different molds and the manufacture of different blades.

### SUMMARY

In an aspect of the present disclosure, a system for handling wind turbine blade molds includes a first framework configured to hold a first mold of one of an upwind and a downwind blade shell part of a wind turbine blade and a second framework configured to hold a second mold of the other of the upwind and the downwind blade shell part of the wind turbine. The system for handling wind turbine blade molds further comprises a set of one or more hinge devices, where the hinge devices comprise hinge connection interfaces configured to be releasably connected to corresponding framework connection interfaces of the first framework and to corresponding framework connection interfaces of the second framework.

According to this aspect, the system allows for a hinge system that, by virtue of being releasably connected to the two frameworks, can be used for multiple blade molds. In particular, the set of hinges may be arranged at a certain workstation of the manufacturing plant, where the hinge system can be releasably connected to a pair of frameworks for manufacturing a wind turbine blade when the frameworks are positioned in the corresponding workstation. Furthermore, the use of the same set of hinges, i.e. the use of a shared hinge system, results in lower equipment costs. As a further advantage, the use of a set of hinges that can be releasably connected to the respective frameworks, provides increased flexibility in the manufacturing process as different frameworks, including frameworks supporting molds for manufacturing blades of different lengths, can be connected to the same hinge system.

In another aspect, a method for manipulating molds during blade manufacturing is provided. The method comprises providing a first framework supporting a first mold containing a first shell part of a wind turbine blade and providing a second framework supporting a second mold containing a second shell part of a wind turbine blade. The method further comprises moving the first and second frameworks along a first direction, specifically a longitudinal direction of the blade, to a workstation, wherein the workstation comprises a set of one or more hinge devices. The first framework is releasably connected to a static member of the hinge devices whereas the second framework is releasably connected to a movable member of the hinge devices, the movable member being pivotable with respect to the static member about a substantially horizontal axis. The method further comprises using the hinge devices to pivot at least a part of the second framework so as to bring the second shell part into contact with the first shell part.

According to this aspect, the method allows the hinge system to remain in a specific workstation while the frameworks holding the molds with the blade shell parts are moved from previous workstations. Thus, a single dedicated position of the manufacturing plant may be used for the operation comprising closing the two molds containing the blade shell parts so that they can be glued and fastened together to manufacture a complete blade. This offers different advantages. In particular, due to the size of wind turbine blades, this operation may require particularly high buildings. By moving the molds to a dedicated workstation with the right equipment, i.e. a set of hinge devices, only a section of the building requires a high ceiling. The moving of molds between different dedicated workstations is also allowing faster production of wind turbine blades. Furthermore, the use of a dedicated workstation is also favoring the dedication of a specialist team, thus resulting in fewer defects and quicker operations. According to this aspect, the frameworks are connected to the hinge system in a releasable manner. This results in a shared hinge system that can be used for multiple frameworks, including frameworks intended for production of different types of blades and, more particularly, for blades of varying lengths. This aspect is accordingly providing improved flexibility on the manufacturing plant while saving equipment costs.

Throughout this disclosure, a longitudinal direction is to be interpreted as a direction along the length of the manufactured blade extending between the root and the tip, i.e. along the longitudinal axis of the blade. Thus, this direction is also the lengthwise direction of the molds used for the manufacture of blade shell parts or the lengthwise direction of the frameworks used to support the molds. A transverse direction is to be interpreted in this disclosure as a direction which is substantially horizontal and substantially perpendicular to the longitudinal direction, i.e. substantially perpendicular to the longitudinal axis of the blade.

### BRIEF DESCRIPTION OF THE DRAWINGS

Figure 1 illustrates a perspective view of an example of a wind turbine;
Figure 2 illustrates a perspective view of an example of a wind turbine blade;
Figures 3A and 3B schematically illustrate at least a part of a production line for manufacturing a wind turbine blade according to an example;
Figures 4A - 4C illustrate an example of a system to manipulate wind turbine blade parts during blade manufacturing;
Figures 5A - 5B schematically illustrate a hinge device in two operating conditions according to one example;
Figures 6A - 6G schematically illustrate a sequence of steps in a method for manipulating molds during blade manufacturing;
Figure 7A - 7B schematically illustrate a moving system for a framework in two operating configurations according to one example.
Figure 8 is a flow diagram of a method for assembling two blade shell parts of a wind turbine blade during blade manufacturing according to an example,

### DETAILED DESCRIPTION OF EXAMPLES

Reference now will be made in detail to examples of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one example can be used with another example to yield a still further example. Thus, it is intended that the present disclosure covers such modifications and variations as come within the scope of the appended claims and their equivalents.

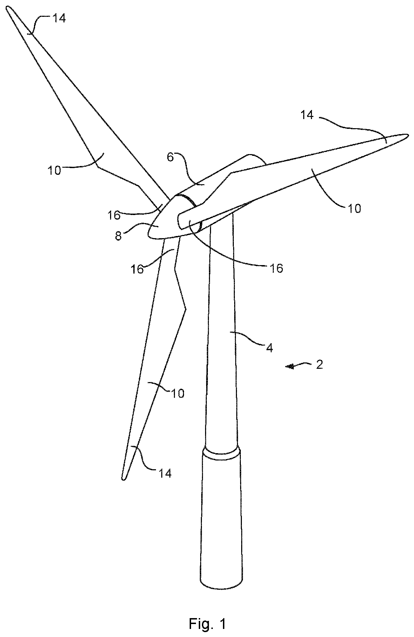

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

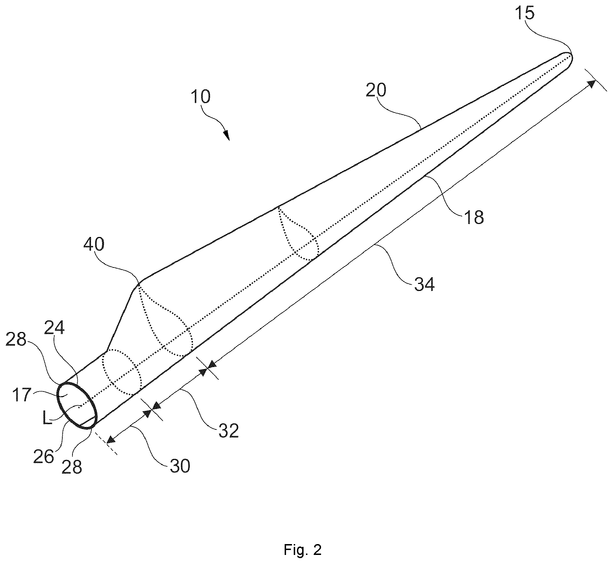

Fig. 2 shows a schematic view of an example of a wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the distance to the hub.

The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 has a semi-circular or semi-oval outer cross-sectional shape.

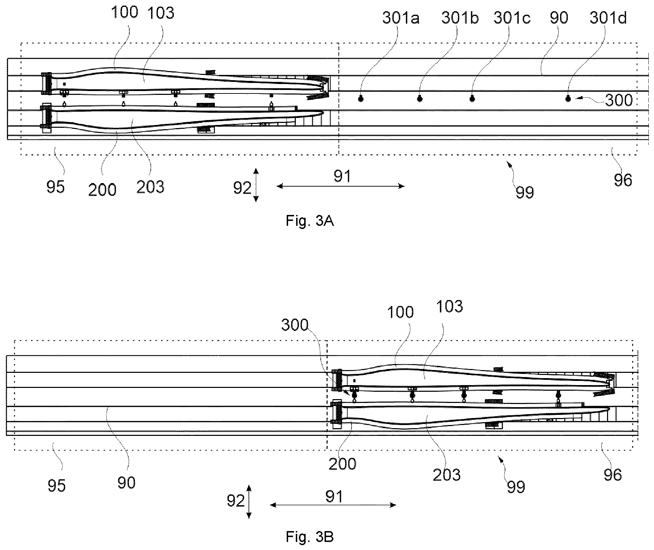

Figure 3A and 3B show an area of a manufacturing line 99 for manufacturing a wind turbine blade 10 according to an example. A first workstation 95 and a second workstation 96 are shown, wherein the second workstation 96 comprises a set 300 of hinge devices 301a - 301d. The number and location of the hinge devices 301a-301d may vary in different examples and, particularly, they may depend on the characteristics (e.g. length), of the manufactured blade. The hinge devices 301a-301d may comprise a support configured to rest on a floor of the workstation.

A first blade shell part corresponding to either the upwind or downwind part of a wind turbine blade 10 may be contained in a first mold 103, which is supported by a first framework 100. A second blade shell part corresponding to the other of the upwind and downwind part of a wind turbine blade 10 may be contained on a second mold 203, which is supported by a second framework 200. Different manufacturing steps are carried out at different workstations. In an example, the manufacturing step at workstation 95 may comprise infusion of matrix material, thus forming separate blade shell parts and, more particularly, an upwind and a downwind blade shell part of the same blade. Curing of the resin may take place at workstation 95 but this is not necessary. In examples further workstations where further manufacturing steps take place may be arranged upstream from the workstation 95, e.g. a gelcoat station and/or a fiber lay-up station.

The first framework 100 and the second framework 200 are movable in a longitudinal direction corresponding substantially to a lengthwise direction of the blade shell parts according to an example. Figures 3A and 3B illustrate the move of the first framework 100 and the second framework 200 from the first workstation 95 to the second workstation 96. The move takes place in the longitudinal direction 91, i.e. along the lengthwise direction of the axis of the blade shell parts. To this end, a number of rails 90 may be provided on the floor of the assembly plant.

Workstation 96 comprises a set 300 of hinge devices 301a-301d. Figure 3B schematically illustrates the releasable connection of both the first framework 100 and the second framework 200 to each of the hinge devices 301a-301d. The hinge devices 301a - 301d may be arranged in holding or supporting structures in the workstation 96. Such holding or supporting structures may be supported, i.e. resting, on the floor of the workstation.

Examples regarding the releasable connection will be provided below in this disclosure. As will be appreciated by those skilled in the art, the manufacturing step at workstation 96, with its set of hinges 300, corresponds to the closing of the molds. Thus, the hinge devices 301a-301d may be used to lift and turn at least a part of one of the first framework 100 and the second framework 200 so that the corresponding blade mold (103 or 203 respectively) is repositioned into a so-called closed mold position such that it is arranged on top of the other blade mold. Once the mold is closed, the two blade shell parts contained in the corresponding molds are put into contact and they are fastened together, e.g. by gluing. Suitable glue may be applied to portions of the shells prior to complete closing of the mold. Glue may also be applied to e.g. internal reinforcement structures such as spars.

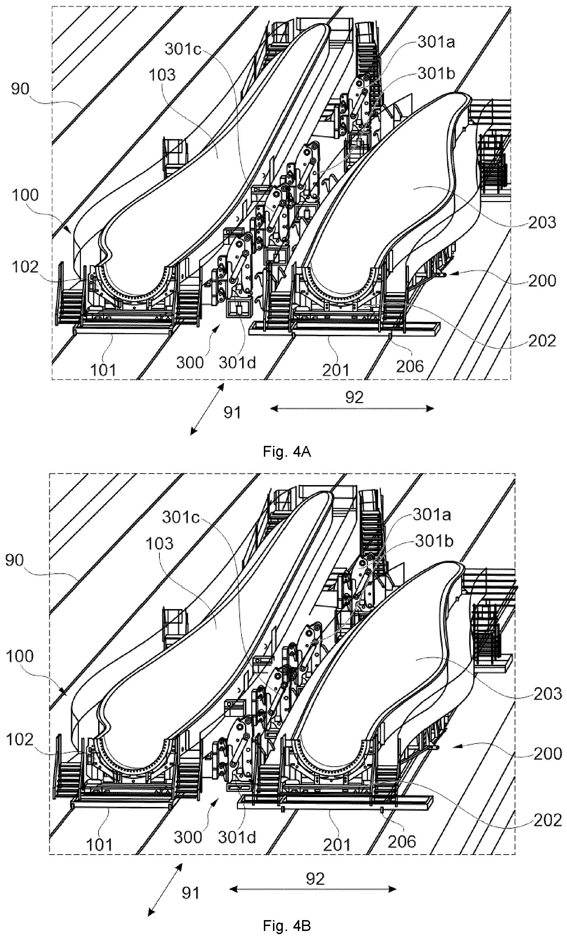

Figures 4A - 4C illustrate an example of a system for handling wind turbine blade molds during blade manufacturing. Different stages of the manufacturing sequence, all of them occurring at the same workstation, are illustrated in each of the figures.

Figure 4A shows a first framework 100 for supporting a first mold 103 and a second framework 200 for supporting a second mold 203. At least one of the frameworks may comprise a bed frame and a mold frame releasably mounted on the bed frame. In this example, the first framework 100 comprises a first bedframe 101 and a first mold frame 102 to support a first mold 103 and the second framework 200 comprises a second bedframe 201 and a second mold frame 202 for supporting a second mold 203.

Although not clearly visible in this figure, the first framework 100 and the second framework 200 in this example each comprise a first set of wheels to move in the longitudinal direction. In particular, the bedframe 101 of the first framework 100 comprises a set of wheels that facilitate the movement of the first framework 100 along the rails 90, i.e. in a longitudinal direction 91. The first mold 103 may be containing either the downwind or the upwind blade part of a wind turbine blade. The second mold 203 is containing the other of the upwind and downwind blade part.

The second framework 202 in this example is also movable in the longitudinal direction 91 and, to this end, a first set of wheels 206 for the second bedframe 201 is arranged. Rails 90 may be used to facilitate the move of the frameworks and, more particularly, to increase safety of the operations by preventing deviations from established maneuvers. Nevertheless, systems with no such rails may be also provided. Different types of rails 90 may be implemented. In particular, rails 90 may comprise longitudinal grooves practiced on the floor of the manufacturing plant or they may also comprise horizontal bars fixed on the floor. It should be clear that alternatives to wheels such as skates, slides, rollers or other may be used for moving the frameworks and molds in other examples.

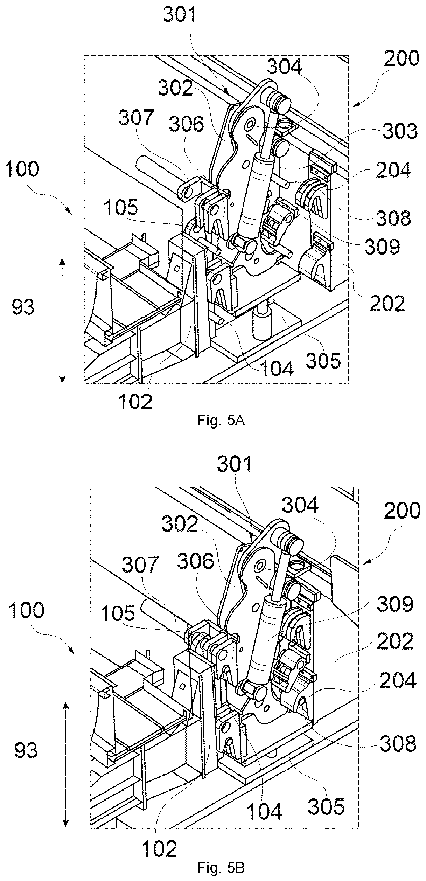

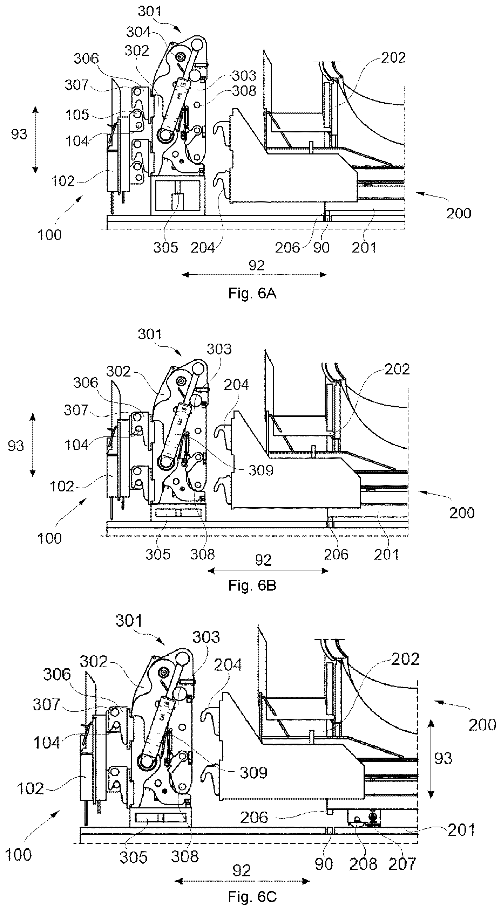

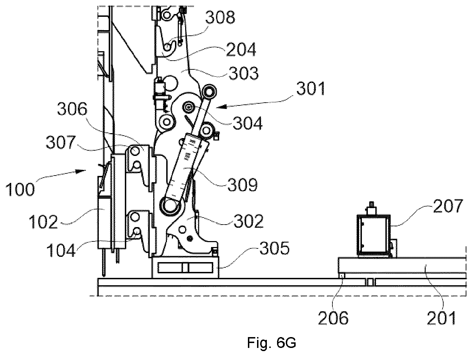

A set 300 of four hinge devices 301a-301d is disposed in between the two frameworks as also shown in Figure 4A. The hinge devices 301a-301d comprise connection interfaces configured to be releasably connected to corresponding connection interfaces of the first 100 and second 200 frameworks. More details regarding structural characteristics and operation of the connection interfaces will be provided with reference to Figures 5A-5B and Figures 6A-6G. In the example depicted in Figure 4A, a set of four hinge devices 301a-301d is shown but any number of hinge devices may be used depending, among other aspects, on the length of the frameworks, which may depend on the length of the manufactured blade.

In the example shown in Figure 4A, the first framework 100 is aligned with the set 300 of hinge devices 301a-301d both in the longitudinal 91 and transverse 92 directions. In other words, the connection interfaces of the framework 100 and hinge devices 301a-301d are in position for engagement in those directions. The second framework 200, which is positioned in the corresponding rails 90, is also aligned with the hinge devices 301a-301d in the longitudinal direction 91, i.e. the connection interfaces of the framework 200 are at the same position in the longitudinal direction 91 as the connection interfaces of the hinge devices 301a-301d, but it is separated from the hinge devices 301a-301d in the transverse direction 92. In other examples, the relative alignment of the first 100 and second 200 framework with respect to the set 300 of hinge devices may be different, e.g., both frameworks 100, 200 may be spaced from the set 300 of hinge devices in the transverse direction 92, both frameworks 100, 200 may be aligned with the hinge devices 301a-301d, or the first framework 100 may be the one spaced apart in the transverse direction 92 whereas the second framework 200 is aligned.

At least one of the first framework 100 and the second framework 200 may be movable in a transverse direction 92, i.e. in a direction substantially perpendicular to the lengthwise direction of the framework. This transverse movement is visible in Figure 4B, which shows a subsequent stage in the manufacturing sequence according to an example.

Figure 4B depicts the situation where both the first framework 100 and the second framework 200 have been connected to the hinge devices 301a-301d. More details will be provided below but Figure 4B shows that, in order to enable said connection, the second framework 200 moves laterally along the direction 92 so that the connection with the hinge devices 301a-301d is enabled. In particular, Figure 4B shows that the second framework 200 is no longer resting on the rails 90 with its first set of wheels 206, which are now lifted and no longer touching the floor and supporting the framework 200, but arranged within connecting distance of the hinge devices 301a-301d. As also visible in Figure 4B, the hinge devices 301a-301d are displaced vertically downwards with respect to their position in Figure 4A to enable the connection. More details about the functionality of the hinge devices 301a-301d will be provided with reference to Figures 5A - 5B and Figures 6A - 6G.

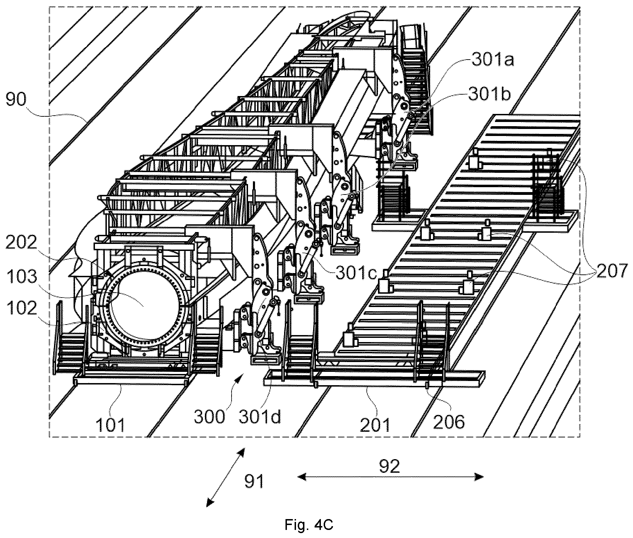

Figure 4C shows a further step in the manufacturing sequence occurring in the same workstation. This step corresponds to the closing of the blade mold, i.e. to the situation where one of the molds is positioned on top of the other mold. Hinge devices 301a-301d are shown in an extended position which, in this example, results in the mold frame 202 of the second framework 200 being tilted and resting on the mold frame 102 of the first framework 100. As a result of this movement, the blade shell part contained on the second mold 203 (not visible) is brought into contact with the blade shell part contained on the first mold 103 so that the two shell parts can be joined together. In this example, only the mold frame 202 of the second framework 200 is tilted while the bedframe 201 of the second framework 200 remains on the floor. Also depicted in Figure 4C are some components of the moving system 207. The moving system 207 is used in an example to lift the second framework 200 and to displace the second framework 200 in the transverse direction to bring it in close proximity of the hinge devices 301a-301d. Details regarding the moving system 207 and its operation will be provided below.

Figures 5A and 5B schematically illustrate an example of a hinge device 301 and its connection with both the first framework 100 and the second framework 200. The hinge device 301 comprises a static first member 302 connectable to the first framework 100 and a movable second member 303 connectable to the second framework 200, the movable second member 303 being arranged to pivot with respect to the static first member 302 about a substantially horizontal axis (defined in this example by a pivot point for horizontal rotation 304) so that at least a part of the second framework 200 (in particular, the second mold frame 202 in this example) can be rotated such that a mold held by the second framework 200 can be brought into contact with a mold held by the first framework so as to form a complete wind turbine blade.

A turning or pivoting mechanism 309 of the hinge device 301 is also shown. In this example, a hydraulic cylinder is used as a turning mechanism 309 although other options, such as an electromechanical actuator, may be available. Alternatively, the hinge device 301 may be passive, thus providing a pivot point about the horizontal axis 304 but not comprising a turning mechanism 309. In those cases, a crane or similar hoisting equipment may be used to turn the second framework 200 (or part of it) about the pivot point 304.

In this example, the second member 303 of the hinge device is connectable to a mold frame 202 of the second framework 200 so that only the mold frame is lifted and pivoted whereas the bed frame 201 is arranged to remain on the floor. In this manner, only the relevant equipment needs to be lifted and tilted.

As observed in Figures 5A and 5B, the hinge devices may comprise connection interfaces 306, 307, 308 configured to be releasably connected to corresponding connection interfaces 104, 105 of the first framework 100 and to corresponding connection interfaces 204 of the second framework 200.

The connection interfaces may in some examples comprise one or more hooks in one of the hinge devices and the corresponding framework configured to engage with connection pins of the other of the hinge device and the corresponding framework. The hinge connection interfaces may further comprise a locking mechanism, specifically comprising a hydraulic pin on the hinge device arranged to engage with a pad eye on the corresponding framework.

In the example, the connection interfaces on the static member 302 of the hinge device 301 comprise a hook system 306 with a number of hooks, which in this example are arranged at two different heights. and which is intended to engage with a connection interface in the first mold frame 102 of the first framework 100 which, in this example, comprises connecting pins 104 arranged at two different heights to match the different heights of the hook system 306.

The hinge connection interface in this example comprises also a locking mechanism which is embodied as a hydraulic pin 307 in the static member 302 of the hinge device 301 which is arranged to engage a pad eye 105 in the mold frame 102 once the two parts are properly engaged.

Similar connection interfaces are shown in Figure 5A for the releasable connection between the movable member 303 of the hinge device 301 and the mold frame 202 of the second framework 200. Particularly, in this example, a hook system 204 is arranged on the mold frame 202 which is intended for connection with the connecting pins 308 in the movable member 303 of the hinge device 301. The hooks are configured to engage with and hook over connecting pins 308.

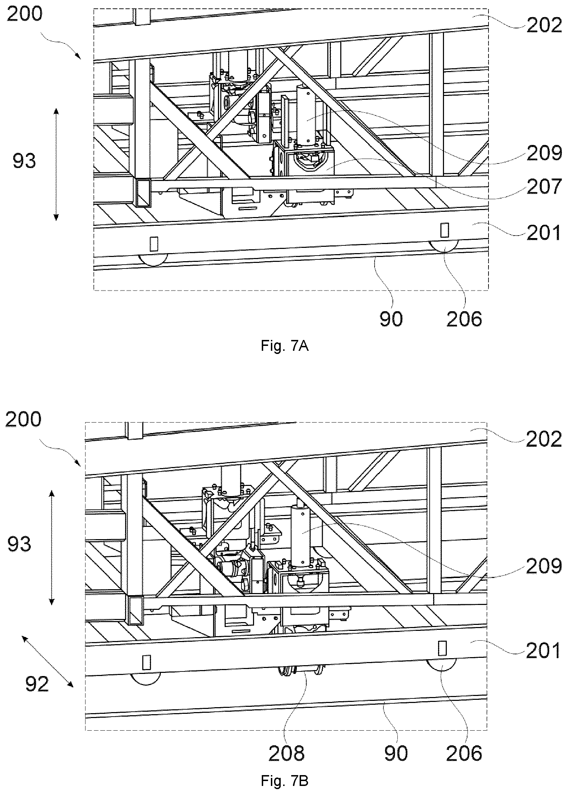

Figure 5A illustrates the situation before connection whereas Figure 5B illustrates the situation upon connection. In particular, Figure 5B shows the hook system 306 of the static member 302 already engaged with the connecting pins 104 of the first mold frame 102. Furthermore, the locked status of this connection is shown by the locking pin 307 being engaged with the pad eye 105. The releasable connection between the movable member 303 of the hinge device 301 and the second mold frame 202 is also established in Figure 7B. Thus, the hook system 204 of the second mold frame 202 is shown in an engaged position with respect to the connecting pins 308 of the movable member 303.

An example may provide for the hinge devices, and particularly the supports of the hinges, to be movable in the vertical direction, specifically by means of a hydraulic system, so that they can be releasably connected to the first framework and to the second framework at various positions.

Figures 5A and 5B illustrate the hinge device 301 at two different heights, i.e. at different positions along the vertical direction 93. Figure 5A shows a situation when the hinge device 301 is not yet connected to the first mold frame 104 and second mold frame 202, in which case a lifting device 305, specifically in this case a hydraulic system, is depicted in a first, extended, position.

Figure 5B illustrates the connected situation, when the hinge device 301 is connected to both the first mold frame 102 and the second mold frame 202. In this situation, the hinge device 301 is shown as being arranged at a different height. More particularly, the lifting device 305 is actuated so that the hinge device 301 is lowered. The use of the lifting device 305 allows then vertical displacement of the hinge device 301 which may be useful to facilitate connection to a certain framework (see Figures 6A-6G) and/or to enable connection of the same hinge device 301 to different frameworks, e.g. frameworks intended for the manufacture of different types of blades which may require connection at different positions in the vertical direction 93.

In order to ensure a proper connection, a plurality of hinge devices may be distributed in the longitudinal direction defined by the length of the first 100 and second 200 framework so that the connection interfaces of each of the hinge devices is faced with a corresponding connection interface of a plurality of connection interfaces of each of the first and second frameworks. This is illustrated by, e.g. Figures 4A-4B and by Figures 5A-5B.

Figures 4A-4C illustrate a system with four hinge devices 301a-301d distributed along the length of the first framework 100 and the second framework 200. Each of those hinge devices 301a-301d comprises some connection interfaces, which are aligned with corresponding connection interfaces of the first and second framework, i.e. the connection interfaces are at the same position along the longitudinal direction 91 so that connection interfaces of the hinge devices face connection interfaces of the frameworks. The specific characteristics of the connection interfaces are further shown in Figures 5A-5B, which provide an example of a single hinge device 301, whose different connection interfaces 306, 307, 308 are aligned with, i.e. faced, with the connection interfaces of the first framework 104, 105 and with the connection interfaces 204 of the second framework 202 in the longitudinal direction.

Furthermore, each of the hinge devices 301a-301d, and in particular the supports of the hinge devices, may be movable in the longitudinal direction. In this manner, increased flexibility for the process is achieved. Said movement may be used to adjust the position of the same set of hinge devices 300 to different frameworks or to correct the relative position of the connection interfaces in case of slight deviations. Although not depicted in the figures, rails may be provided for the displacement of the hinge devices 301a-301d. In an example, the hinge devices 301a-301d may be arranged with their supports on said rails and movement of the hinge devices may be facilitated by a spindle driven by a servo motor which may displace the hinge device along the rails.

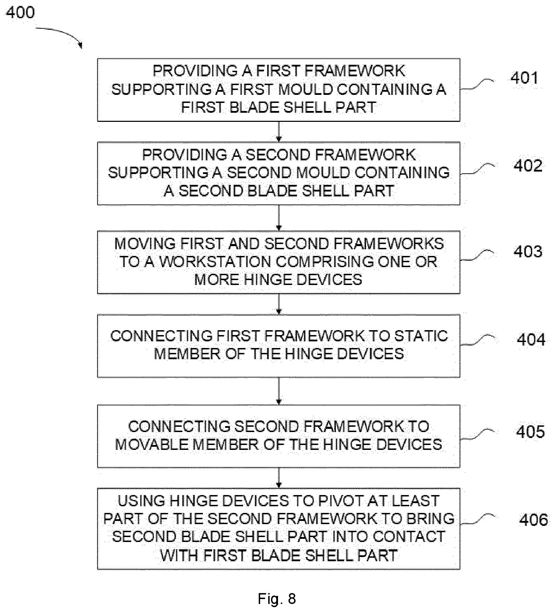

With examples of the system described herein, a method 400 according to a further aspect of the present disclosure is enabled. This method 400 is further exemplified by the flowchart presented in Figure 8. The method 400 comprises, at block 401, providing a first framework supporting a first mold containing a first blade shell part of a wind turbine blade and, at block 402, providing a second framework supporting a second mold containing a second blade shell part of a wind turbine blade. The method 400 comprises, at block 403, moving the first and second frameworks along a first direction, specifically a longitudinal direction, to a workstation, wherein the workstation comprises one or more hinge devices. At block 404, the method 400 comprises connecting the first framework to a static member of the hinge devices and block 405 comprises connecting the second framework to a movable member of the hinge devices, the movable member being pivotable with respect to the static member about a substantially horizontal axis The method further comprises, at block 406, using the hinge devices to pivot at least a part of the second framework so as to bring the second blade shell part into contact with the first blade shell part.

Connecting the first framework to a static member of the hinge devices or connecting the second framework to a movable member of the hinge devices may further comprise aligning the respective framework with the hinge devices so that connection interfaces of the respective framework are at the same longitudinal position as corresponding connection interfaces of the hinge devices.

The method in another example may comprise, in order to connect the first framework to a static member of the hinge devices or in order to connect the second framework to a movable member of the hinge devices, vertically displacing at least one of the hinge devices with a lifting device and the respective framework with a moving system. By implementing a method where connection interfaces of the frameworks are facing connection interfaces of the hinge devices, releasable connection of the respective parts is facilitated. Furthermore, the vertical displacement of the hinge devices and/or of the frameworks may also facilitate the releasable connection in some examples by providing increased flexibility.

The method according to another example may also comprise moving at least one of the first framework and the second framework in a transverse direction when connecting the first framework to the static member of the hinge devices or when connecting the second framework to a movable member of the hinge devices. This method allows increased flexibility of the system by providing an additional degree of freedom in the movement of the frameworks. In some examples, a moving system may be used to displace the respective framework in the vertical direction and in the transverse direction. In other examples, two different systems may be used to displace the framework in either the vertical or the transverse direction.

In a further example method, connecting a second framework to a movable member of the hinge devices may comprise connecting a mold frame support of the second framework to the movable member of the hinge devices and it may further comprise releasing the mold frame from a bed frame before actuation the hinge devices so that only the mold frame with the second blade shell is pivoted upon actuation of the hinge devices. In this manner, only the required equipment is tilted which may facilitate the operation while reducing costs.

Figures 6A - 6G schematically illustrate a method of manipulating molds during a blade manufacturing process. More particularly, these figures provide a sequence of an example of the releasable connection of a hinge device 301 to both a first mold frame 102 and a second mold frame 202.

In Figure 6A, a similar situation to the one depicted in reference to Figure 5A is shown. A hinge device 301 is aligned, i.e. facing, a first mold frame 102 and a second mold frame 202. In particular, the static member 302 of the hinge device 301 is facing the first mold 102 whereas the movable member 303 of the hinge device 301 is facing the second mold frame 202. The connection interfaces 306, 307 of the static member 302 of the hinge device 301 are aligned with the connecting pins 104 of the first mold frame 102 in the first direction 91, i.e. they are facing each other. Similarly, the same connection interfaces are also aligned in the transverse direction 92. Nevertheless, the connection interfaces are at a different height, i.e. the hook system 306 of the static member 302 of the hinge device 301 is at a higher vertical position than the receiving connecting pins 104 of the first mold frame 102. Consequently, releasable connection has not occurred yet. Similarly, the connecting pins 308 on the movable part 303 of the hinge device 301 and the hook system 204 of the second frame 202 are located at the same position along the longitudinal direction 91 but they are at different heights in the vertical direction 93 and also at different positions in the transverse direction 92.

In the situation illustrated in Figure 6B, the static member 302 of the hinge device 301 is engaged with the mold frame 102 of the first framework 100. To this end, a lifting device 305 of the hinge device 301 may be provided. The lifting device 305, e.g. a hydraulic system, is actuated so that the hinge device 301 is lowered in the vertical direction 93 from the situation previously depicted in relation to Figure 6A until the hook system 306 of the static member 302 engages the connecting pins 104 of the first mold frame 102. Once in engagement position, the locking mechanism is actuated so that the locking pin 307 is passed through the eye pad 105.

Figures 6C-6E show a sequence for engagement between the connection interfaces of the movable member 303 of the hinge device 301 and the connection interfaces of the second mold frame 202. As previously shown in relation to Figure 6B, the connecting pins 308 of the movable member 303 are aligned with the hook system 204 of the second mold frame 202 in the longitudinal direction 91 but they are at a different position in the transverse direction 92. Furthermore, the hooking system 204 is at the same position in the vertical direction 93 as the connecting pins 308 but, as also deductible from previous Figure 6B, the second mold frame 202 may be lifted so that the hook system 204 can be arranged above the connecting pins 308 by displacing the second mold 203 in the transverse direction 92 and then lowered for engagement. Consequently, a first upward vertical movement, i.e. a movement along direction 93, followed by a transverse movement along direction 92, and finally, a downward vertical movement along direction 93 may be used to connect the movable part 303 of the hinge device 301 with the second mold frame 202.

In examples of the disclosure, at least one of the first framework and the second framework may be movable in a transverse direction of the first and the second framework. To this end, the first of second framework may engage a moving system comprising a second set of wheels arranged substantially in the transverse direction. Such moving system may also be configured to lift the at least first and second framework from the floor in an upward direction so that the second set of wheels supports the framework while allowing displacement of the framework in the transverse direction. In some examples, the moving system may comprise a hydraulic piston configured to push the at least first or second framework in a vertically upwards direction while the second set of wheels rests on the floor.

Figure 6C depicts such a moving system 207 which, in this example, is attached to the bed frame 201 of the second framework 200. By actuating the moving system, the second framework 200, which includes the second bed frame 201 and the second mold frame 202, is lifted from the floor in a vertical direction 93. As a result of this lifting, the second framework 200 is no longer supported by the first set wheels 206 but by a second set of wheels 208. As also shown in Figure 6C, the first set of wheels 206 is configured to run in the longitudinal direction 91 whereas the second set of wheels 208 is oriented in the transverse direction 92.

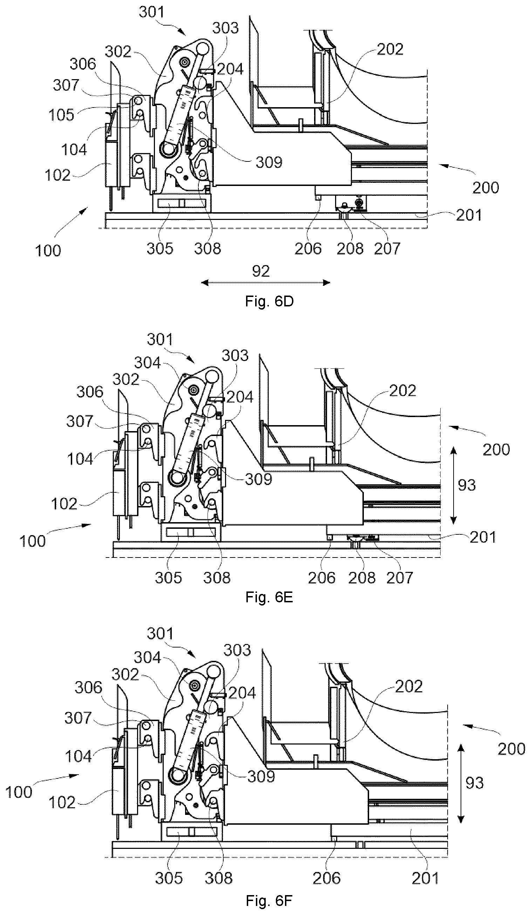

Once lifted from the floor and supported by the second set of wheels 208, the second framework 200 may be moved in the transverse direction 92 with the aid of the second set of wheels 208 toward the hinge device 301 so that the hook set 204 of the second mold frame 202 and the connecting pins 308 of the movable member 303 of the hinge device 301 are in the same position in the transverse direction 92. This situation is schematically illustrated in Figure 6D. A similar situation to that depicted in Figure 6A for the connection of the first mold frame 102 and the static member 302 of the hinge device is also observed here. Thus, connection interfaces of the second mold frame 202 and of the movable member 303 of the hinge device 301 are aligned in both the longitudinal direction 91 and the transverse direction 92 but they are at different positions, i.e. heights, in the vertical direction 93.

In Figure 6E, the moving system 207, which was already used to move the second framework 200 in the transverse direction 92, is used to lower the framework 200 (and so the second mold frame 202) along the vertical direction 93 until the hook set 204 is engaged with the connecting pins 308 of the movable member 303 of the hinge device 301. Note that during this lowering movement, the second framework 200 is still supported by the second set of wheels 208 of the moving system 207 and not by the first set of wheels 206, which is still slightly above the floor. Although not shown in Figure 6E, a locking pin or a similar system may be used to lock the parts so as to prevent any accidental movement. As a result of this operation, the hinge device 301 is releasably connected to both the first framework 100 and the second framework 200. More particularly, the static member 302 of the hinge device 301 is connected to the first mold frame 102 of the first framework 100 and the movable member 303 of the hinge device 301 is connected to the second mold frame 202 of the second frame 200.

Figure 6F shows a subsequent situation in an example which, in this case, comprises decoupling the second mold frame 202 from the second bed frame 201. Thus, the releasable connection between the mold frame 202 and the bed frame 201 (not shown in the figure) is released and the bed frame 201 is lowered by retracting the moving system 207 so that the first set of wheels 206 is again in contact with the floor and supporting the bed frame 201. In this situation, the second mold frame 202 and the corresponding second mold 203 containing the blade shell part may be supported by the connection interface with the movable member 303 of the hinge device 301.

In Figure 6F, the turning operation is schematically represented. In this example, a turning mechanism, more specifically a hydraulic cylinder of the hinge devices, is used to pivot at least a part of the second framework so as to bring the second blade shell part into contact with the first blade shell part. Thus, the turning mechanism 309 of the hinge device 301 is actuated so that the movable part 303 of the hinge device 301, which is connected to the second mold frame 202, rotates about the pivot point for horizontal rotation 304 thus bringing the second blade shell part arranged in the second mold 203 (not shown in the figure) into contact with the first blade shell part arrange in the first mold 103 (not shown in the figure) to close the mold. Although this example presents a hydraulic piston for the turning mechanism 309, other actuators may be also used. Alternatively, a further crane or hoisting equipment may be employed to lift and turn the second mold frame 202. In examples of the disclosure, the first framework 100 may act as the anchor for the hinge devices 301a-301d, so that the hinge devices 301a-301d may be only supported but not fixed to the floor. In this manner, the floor does not need to be reinforced to absorb the turning torque.

Figures 7A - 7B show an enlarged view of the moving system 207 engaged with the second bed frame 201 of the second framework 200. Figure 7A corresponds to the situation where the moving system 207 is not operating, i.e. the bed frame 201 is supported by the first set of wheels 206 and the moving system 207, which comprises a hydraulic piston 209, is in a retracted position. Accordingly, the second set of wheels 208 is not in contact with the floor and the second framework 200 is able to move with the aid of the first set of wheels 206 in the longitudinal direction 91 along the rails 90.

On the other hand, Figure 7B shows the situation when the moving system 207 is in its extended position. Thus, the hydraulic piston 209 is actuated, which results in the second set of wheels 208 been projected from its original retracted position. As a result of the force exerted by the hydraulic pistons 209, the second framework 200, is pushed upwards in the vertical direction 93. Consequently, the first set of wheels 206 is no longer in contact with the floor and the second framework 200 is now supported by the second set of wheels 208 which, in this example, is oriented in the traversal direction 92, i.e. in a direction substantially perpendicular to the longitudinal direction of the second framework 200.

The moving system 207 in this example comprises a hydraulic piston 209 as actuation mechanism. Nevertheless, other actuators, such as electromechanical systems, may be also used in alternative examples.

The moving system 207 in this example facilitates movement of the second framework 200 in two different directions. Thus, actuation of the hydraulic piston 209 allows moving the framework 200 in a vertical direction 93. Furthermore, because a second set of wheels 208 is used, movement in the direction of that set of wheels is also facilitated. In the example presented with reference to Figures 6A-6G and 7A-7B, the direction of the second set of wheels 208 coincides with the transverse direction 92. Nevertheless, other examples may comprise wheels oriented in different directions. In still further embodiment, the orientation of the wheels in the moving systems may be adjusted by means of an internal mechanism. In still a further example, multiple moving systems comprising different sets of wheels oriented at different orientations, may be engaged with the framework and they may be selectively actuated so that the second framework becomes supported by a set of wheels with a certain preferred orientation aimed at facilitating move of the framework in certain directions.

Although not shown in the figures, an example method may further comprise attaching the first blade shell contained in the first mold 103 part of the blade and the second blade shell part contained in the second mold 203 so as to form a single blade. The method may further comprise actuating the hinge devices 301 to pivot the at least part of the second framework 200 back to its non-tilted position. Finally, the method may comprise moving the first framework 100 and/or the second framework 200 to a different workstation.

According to this example, a reverse sequence to the one described with reference to figures 6A to 6F may be used to release the connections between the set 300 of hinge devices 301 and both the first mold frame 102 and the second mold frame 202. Upon release, the first framework 100 and the second framework 200 may be movable in the longitudinal direction 91 by means of the corresponding sets of first wheels 106 or 206.

Furthermore, a moving system 207, for example, but not limited, like the one shown in reference to Figures 7A-7B, may be used to displace the corresponding framework in a non-longitudinal direction and, more particularly, on a transverse direction 92. In this manner, any of the frameworks may be positioned in a different workstation to continue with a next manufacturing step of the blade. This may be the situation if, following with the example shown in reference to Figures 6A-6G, the first framework 100 containing now the blade shell parts is moved. Alternatively, the next workstation may comprise an initial manufacturing step for a new wind turbine blade. This may be the situation if, following with the example shown in reference to Figures 6A-6G, the second framework 200, which in the example is no longer carrying a blade shell part at the end of the sequence, is moved.

This written description uses examples to disclose the teaching, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various examples described, as well as other known equivalents for each such aspects, can be mixed and matched by one of ordinary skill in the art to construct additional examples and techniques in accordance with principles of this application. If reference signs related to drawings are placed in parentheses in a claim, they are solely for attempting to increase the intelligibility of the claim, and shall not be construed as limiting the scope of the claim.

## Claims

1. System for handling wind turbine blade molds during blade manufacturing, the system comprising:
a first framework (100) configured to hold a mold (103) of one of an upwind (24) or a downwind (26) blade shell part of a wind turbine blade (10),
a second framework (200) configured to hold a mold (203) of the other of the upwind (24) or the downwind (26) blade shell part of a wind turbine blade,
a set of one or more hinge devices (301a-301d), wherein
the hinge devices (301a-301d) comprise hinge connection interfaces (306, 307, 308) configured to be releasably connected to corresponding framework connection interfaces (104, 105) of the first framework (100) and to corresponding framework connection interfaces (204) of the second framework (200).

2. System according to claim 1, wherein the hinge devices (301a-301d) comprise a support configured to rest on the floor.

3. System according to claims 1 or 2, wherein the first framework (100) and the second framework (200) are movable in a longitudinal direction (91), the longitudinal direction (91) corresponding substantially to a lengthwise direction of the blade shell parts (24, 26).

4. System according to any previous claim wherein the hinge devices (301a-301d) comprise a static first member (302) connectable to the first framework (100) and a movable second member (303) connectable to the second framework (200), the second member (303) being arranged to pivot with respect to the first member (302) about a substantially horizontal axis.

5. System according to any previous claim wherein at least one of the first framework (100) and the second framework (200) comprises a bed frame (101, 201) and a mold frame (102, 202) releasably mounted on the bed frame (101, 201), and further wherein the hinge devices 301a-301d comprise a static first member (302) and a movable second member (303), the movable second member (303) of the hinge devices (301a-301d) being connectable to the mold frame (202) of the second framework (200) so that only the mold frame (202) is pivoted whereas the bed frame (201) is arranged to remain on the floor.

6. System according to any previous claim wherein one of the hinge connection interfaces (306, 307, 308) and the corresponding framework connection interfaces (104, 105, 204) comprise one or more hooks configured to engage with connection pins of the other of the hinge connection interfaces (306, 307, 308) and the corresponding framework connection interfaces (104, 105, 204), the hinge connection interfaces further comprising a locking mechanism.

7. System according to any previous claim wherein the hinge devices (301a-301d) are movable in the longitudinal direction (91).

8. System according to any previous claim wherein the hinge devices (301a-301d) are movable in the vertical direction (93), specifically by means of a lifting device (305), so that the vertical position of the hinge connection interfaces (306, 307, 308) with respect to the framework connection interfaces (104, 105, 204) can be adjusted to enable releasable connection between the hinge devices (301a-301d) and the first (100) and second (200) framework.

9. System according to any previous claim wherein the first framework (100) and/or the second framework (200) are movable in a transverse direction (92), the transverse direction (92) being substantially perpendicular to the lengthwise direction (91) of the blade shell parts, and more specifically, wherein the first (100) and/or second (200) movable framework is movable by a moving system (207) comprising a set of wheels (208) arranged substantially in the transverse direction (92).

10. System according to claim 9, wherein the moving system (207) comprises a hydraulic piston (209) configured to lift the at least first (100) or second (200) framework from the floor by pushing the at least first (100) or second (200) framework in a vertically upwards direction (93) while the set of wheels (208) arranged substantially in the transverse direction (92) rests on the floor and supports the framework thus allowing displacement of the framework (100, 200) in the transverse direction (92).

11. Method for manipulating molds during blade manufacturing with a system according to any of claims 1 to 10, the method comprising:
providing a first framework (100) supporting a first mold (103) containing a first blade shell part of a wind turbine blade;
providing a second framework (200) supporting a second mold (203) containing a second blade shell part of a wind turbine blade;
moving the first (100) and second (200) frameworks along a first direction, specifically a longitudinal direction (91), to a workstation (96), wherein the workstation (96) comprises one or more hinge devices (301a-301d);
connecting the first framework (100) to a static member (302) of the hinge devices (301a-301d);
connecting the second framework (200) to a movable member (303) of the hinge devices (301a-301d), the movable member (303) being pivotable with respect to the static member (302) about a substantially horizontal axis; and
using the hinge devices (301a-301d) to pivot at least a part of the second framework (200) so as to bring the second blade shell part into contact with the first blade shell part.

12. Method according to claim 11, wherein connecting the first framework (100) to a static member (302) of the hinge devices (301a-301d) or connecting the second framework (200) to a movable member (303) of the hinge devices (301a-301d) comprises:
aligning the respective framework (100, 200) with the hinge devices (301a-301d) so that connection interfaces (104,105, 204) of the respective framework are at the same longitudinal positions as corresponding connection interfaces (306, 307, 308) of the hinge devices (301a-301d).

13. Method according to claims 11 or 12, wherein connecting the first framework (100) to a static member (302) of the hinge devices (301a-301d) or connecting the second framework (200) to a movable member (303) of the hinge devices (310a-301d) comprises:
- vertically displacing at least one of the hinge devices (301a-301d) with a lifting device (305) or vertically displacing the respective framework (100, 200) with a moving system (207); and/or
- moving at least one of the first framework (100) or the second framework (200) in a transverse direction (92).

14. Method according to any of claims 11 to 13, wherein using the hinge devices (301a-301d) to pivot at least a part of the second framework (200) so as to bring the second blade shell part into contact with the first blade shell part comprises actuating a turning mechanism 309, more specifically a hydraulic cylinder, of the hinge device.

15. Method according to any of claims 11 to 14, the method further comprising:
bonding the first blade shell part of the blade and the second blade shell part so as to form a single blade;
actuating the hinge devices (301a-301d) to pivot the at least part of the second framework (200) back to its non-tilted position;
moving the first (100) and/or the second (200) framework to a different workstation.
